Europäisches Patentamt

European Patent Office

Office européen des brevets

(19)

(11) Publication number : **0 039 524
B2**

(12)    # NEW EUROPEAN PATENT SPECIFICATION

(45) Date of publication of the new patent specification :
26.04.89

(51) Int. Cl.⁴ : **C 08 G 69/26**, C 08 G 69/28

(21) Application number : 81200326.7

(22) Date of filing : 25.03.81

(54) **Preparation of polytetramethylene adipamide.**   ·

(30) Priority : 26.03.80 NL 8001763

(43) Date of publication of application :
11.11.81 Bulletin 81/45

(45) Publication of the grant of the patent :
27.06.84 Bulletin 84/26

(45) Mention of the opposition decision :
26.04.89 Bulletin 89/17

(84) Designated contracting states :
**BE CH DE FR GB IT LI NL**

(56) References cited :
**JOURNAL OF POLYMER SCIENCE, Polymer Chemis-
try Edition, vol. 15, no. 3, March 1977, R.J. GAYMANS
et al. "Preparation and some properties of nylon 46"
pages 537-545**
**The file contains technical information submitted
after the application was filed and not included in this
specification**

(73) Proprietor : **STAMICARBON B.V.
Mijnweg 1
NL-6167 AC Geleen (NL)**

(72) Inventor : **Gaymans, Reinoud Jaap
Verdilaan 3
NL-7522 KA Enschede (NL)**
Inventor : **Bour, Edmond Hendrik Joseph Piet
Vriendenkringstraat 34
NL-6141 LJ Limbricht (NL)**

EP 0 039 524 B2

Jouve, 18, rue St-Denis, 75001 Paris, France

**Description**

The invention relates to a method for the preparation of polytetramethylene adipamide by heating the salt of 1.4. diaminobutane and adipic acid at elevated pressure till a prepolymer is formed and by further allowing this prepolymer to be condensed to polytetramethylene adipamide with a sufficiently high molecular weight.

In Journal of Polymer Sciences, Polymer Chemistry Addition, Vol. 15, no. 3, March 1977, there is found a description of the preparation and some properties of Nylon 4,6. The method disclosed therein produces however discoloured polymers.

The purpose of the invention is to find a method in the application of which a prepolymer is formed, in a short time, in a liquid phase, which prepolymer can be converted, by aftercondensation, into a white polyamide with a high molecular weight.

According to the invention a polyamide substantially consisting of units of $[NH—(CH_2)_4—NH—CO(CH_2)_4—CO]$ is prepared by heating the salt of 1.4. diaminobutane and adipic acid and, if desired, other polyamideforming compounds until a prepolymer is formed, upon which in a following step the prepolymer is converted by aftercondensation at elevated temperature into a polytetramethylene adipamide with a high molecular weight, in which process the prepolymerization is effected by heating the salt to a temperature of between 175 °C and 220 °C and, if desired, keeping the reaction mixture at a temperature of between 175 °C and 220 °C for a limited period, in which process the water vapour partial pressure does not exceed 30 bar and the temperature, pressure and reaction time is chosen so that the amount of cyclical end-groups in the prepolymer thus obtained does not exceed 0,20 mg equivalent per gram of prepolymer.

With this method white prepolymers can be prepared which can be converted, without problems, by further condensation into white polyamide with a high molecular weight.

It has been found by the applicant that the prepolymerization of 1.4. diaminobutane with adipic acid is sensitive to side reactions. Presumably, in effecting the reaction under conditions which are not carefully controlled, cyclic derivatives of 1.4. diaminobutane and cyclized oligomers and prepolymers with cyclical endgroups are formed.

Important for the proper progress of the reaction are the reaction temperature, the temperature at which the reaction mass may be maintained for a limit amount of time, the total reaction time and the water vapour partial pressure at which the reaction is effected. It is also desirable to avoid local overheating of the reaction mass, especially if the reaction mass should be in the solid state for some period. Thus it may be advisable to limit the rate at which the reaction mass is heated in the range between 175 °C and 220 °C to at most 3,5 °C/minute.

With proper precautions against local overheating and when the reaction mass is liquid, a higher rate could be permitted. For practical considerations a heating rate of at least 0.1 °C/minute will often be applied. A heating rate of between 0.5 °C/minute and 2 °C/minute will be suitable in any case. The rate at which the reaction mass is heated to 175 °C is less critical. The temperature can be increased in a very short time to 75 to 100 °C.

The salt of 1.4. diaminobutane and adipic acid can be supplied in solid and dry form or as a moist mass or a solution or slurry in water. Preferably, the quantity of water supplied is 50 % by weight at most calculated in respect of the quantity of polyamide-forming compounds and water. When using substantial quantities of water, the water vapour partial pressure can, at a temperature increase, be kept below the 30-bar limit by blowing off steam. In connection with the aftercondensation an excess of 1.4. diaminobutane is preferably applied, as further specified in EP 81 200 327.5 filed simultaneously. (EP-B-0 038 094).

The reaction mixture is heated to a temperature of between 175 °C and 220 °C. At a temperature below 175 °C the molecular weight of the prepolymer is too low. A temperature of more than 220 °C strongly tends to result in the formation of discoloured prepolymers and prepolymers that are more difficult to aftercondense. The temperature between 175 °C and 220 °C is the most suitable to prepare a white prepolymer with a sufficiently high molecular weight that can be properly aftercondensed. The reaction mixture can be heated to the desired temperature in one single step, but the mixture can also be heated in two or more steps and, in between, be kept, for a longer or shorter time, at a temperature of between 175 °C and 220 °C. The total duration of the prepolymerization, including heating time, is no more than 6 hours generally between 0,5 and 6 hours.

In the temperature range between 175 °C to 210 °C, the reaction mass may be kept at a constant temperature for longer periods of time, for example during a period of between 15 and 120 minutes.

The reaction mass is maintained in liquid form during the whole of the prepolymerisation process in order to increase the rate of polymerization, to obtain a homogeneous product and to avoid discolouration by local overheating. This purpose is reached by choosing the water vapour partial pressure ($P_{H_2O}$) so high that sufficient water will remain in the reaction mass to keep the latter in the liquid phase at the temperature at which the condensation takes place. The water is formed in a sufficient quantity in the condensation reaction, and, if desired, water can, in addition to the salt, be fed to the reactor as well. A $P_{H_2O}$ of about 20 to 25 bar, at temperatures of between 175 °C and 220 °C, will in general and depending on the degree of polymerisation suffice for this purpose. At the prepolymerisation temperature, however the $P_{H_2O}$ must not be above 30 bar. At a $P_{H_2O}$ of more than 30 bar a prepolymer is obtained which is difficult to convert into a high molecular polyamide by aftercondensation. Preferably, the $P_{H_2O}$ will be less than 5 bar above the minimum partial pressure necessary to maintain the reaction mass in the liquid state.

As the prepolymer has a melting point of between about 270 °C and 290 °C, it is possible to obtain the prepolymer in liquid form, virtually free of water, by heating the reaction mass to a temperature exceeding the melting point and releasing the pressure near or at the final temperature.

Applicant has found that it is very important to limit the number of cyclical end-groups in the prepolymer as much as possible. These cyclical end-groups are essentially pyrrolidinyl groups. If there are more than 0,20 mg eq/g of cyclical end-groups, it will be very difficult to convert the prepolymer within a reasonable time to a high molecular weight polyamide.

Prepolymers with a cyclical end-group content between 0,10 and 0,20 mg eq/g and better yet between 0.10 and 0.15 mg eq/g can be converted to high molecular weight polymers, provided that they contain a rather large excess of 1.4. diaminobutane of say at least 3 moles-% calculated on the stoichiometric amount of diaminobutane. Preferably the reaction is carried out under such conditions that the content of cyclical end-groups in the prepolymer is at the most 0,10 mg eq/g, because in that case the prepolymer can easily be converted to a high molecular weight polymer.

The salt can be prepared as known in the art, for instance by adding adipic acid to a solution of 1.4. diaminobutane until the equivalence point has been reached. If desired, extra diamine can be added to the salt. As specified in EP-B-0 038 094 there are advantages in applying an excess of diamine of between 0.5 and 15 moles %, more specifically between 1.5 and 5 moles-%. An excess of diamine does not adversely affect the prepolymerisation. The salt can be fed to the prepolymerisation reactor in dry form or as a moist mass or as a solution or slurry in water. As reactor, an autoclave or pressure reactor, whether or not provided with a stirrer, can be used. The reaction can also be effected continuously in a reactor suitable for this purpose. It is recommended to effect the prepolymerisation in the absence of oxygen in order to prevent discolouration, and to use a reactor material which is resistant to corrosion by the hot alkaline reaction mass, e.g. titanium.

The prepolymer is subsequently subjected to aftercondensation. The aftercondensation is preferably effected in the solid phase at a temperature of between 200 °C and 275 °C, more specifically between 225 °C and 275 °C, in an atmosphere containing water vapour. The aftercondensation is described in more detail in EP-81 200 327 5 filed simultaneously.

The reaction mixture, which is subjected to the prepolymerisation, may contain additives customary for polyamides, such as stabilizers, antioxidants and matting agents.

In addition to diaminobutane and adipic acid, up to 20 % by weight of other polyamide-forming compounds can be worked up in the prepolymer. In this connection caprolactam, undecalactam, laurinolactam and other lactams, amino carboxylic acids, such as 11-amino-undeca-carboxylic acid, diamines such as hexamethylene diamine, and dicarboxylic acids such as succinic acid, sebacic acid, oxalic acid isophthalic acid and terephthalic acid, may be thought of. Preference, however, is given to the preparation of the homopolyamide, which has very good physical properties.

The number-average molecular weight of the prepolymer prepared by applying the method according to the invention may generally be between 1 000 and 15 000. Preferably the reaction conditions, particularly the temperature, the water content and the duration of the reaction, are chosen so that a prepolymer with a molecular weight of between 2 000 and 10 000 is obtained. By aftercondensation a polyamide can be obtained with a molecular weight of between 15 000 and 75 000. These polyamides are very suitable for making yarns and various objects.

The invention is elucidated by means of the following examples.

Example 1

A. The solid of 1.4. diaminobutane and adipic acid was prepared by dissolving 1 part by weight of the diamine in 8 parts by weight of methanol and putting this solution in a reactor provided with a stirrer and reflux cooler. Subsequently, while stirring, solid adipic acid was added slowly until the equivalence point was reached. After cooling, the precipitated salt was filtered off, washed with cold methanol and dried. Then 1.4. diaminobutane was added to an excess of 2.1 moles-%. In the following examples the salt was prepared in the same way, unless specifically stated otherwise.

B. A 5-litre autoclave was filled with 1 700 g of the salt obtained under A and 170 of water. After flushing with nitrogen the mass was heated, in 80 minutes, to 180 °C and kept for 100 minutes at that temperature. In this process the pressure increased to, and was maintained at, 8 bar. After that the pressure was reduced to 1 bar, and the reaction mass was allowed to cool. The solid white prepolymer was taken from the reactor. It had a relative viscosity of 1.33 (1 g of polymer in 100 ml 96 % sulfuric acid at 20 °C) and a cyclical end group content [pyr] of 0,032 mg eq/gram polymer.

In the examples following hereafter the same method was applied for the prepolymerisation, albeit with different temperatures, times and pressures. With the use of a salt not containing an excess of diaminobutane the same result was achieved.

3

C. The prepolymer was ground to a particle size between about 0.1 and 0.5 mm and put in a rotating reactor suitable for effecting reactions. After flushing with nitrogen, an oxygen-free mixture of 30 % by volume of steam and 70 % by volume of nitrogen, heated to 260 °C, was passed, at a pressure of 1 bar, through the rotating reactor. The prepolymer was subjected in this way to aftercondensation for 6 hours at a temperature of 260 °C, the gas mixture specified above being passed through.

This method has been applied also in the following examples for the aftercondensation.

Thus a white polytetramethylene adipamide was obtained with an $\eta_{rel}$ of 4,65 and [pyr] of 0,005 meq/g.

## Example II

In the way described in example I a prepolymer was prepared by heating the salt, which contained an excess of 8 moles % of diaminobutane, in 55 minutes from 75 °C to 155 °C and, successively, in 160 minutes from 155 °C to 200 °C. The pressure was 19 bar at most. The prepolymer thus obtained was white and had an $\eta_{rel}$ of 1,23 ($M_n$ of 3 500) and [pyr] of 0,028.

By aftercondensation (6 hours at 260 °C) a white high molecular polyamide could be obtained with a $\eta_{rel}$ of 4,90 corresponding to a $M_n$ of 34,700.

## Example III

A mixture of 15 parts by weight of water and 100 parts by weight of 1.4. diaminobutane-adipic acid salt, which contained an excess of 5.4 moles-% of diamine, was heated in 75 minutes from 75 °C to 175 °C and, successively, heated in 100 minutes to 207 °C. The pressure was limited, by blowing off, to 10 bar. The prepolymer had an $\eta_{rel}$ of 1,20 ($M_n$ of 4 500) and [pyr] of 0,122. By aftercondensing for 6 hours at 260 °C, it was converted into a white polyamide with an $\eta_{rel}$ of 3,37, corresponding to an $M_n$ of 27,400.

## Example IV

A mixture of 15 parts by weight of water and 100 parts by weight of 1.4. diaminobutane-adipic acid salt, which contained an excess of 8 moles-% of diamine, was heated in 240 minutes from 20 °C to 210 °C. The pressure increased to 19 bar. The prepolymer could be converted by aftercondensation (6 hours at 260 °C) into a white polyamide with an $M_n$ of 24,800 ($\eta_{rel}$ of 2,85).

## Example V

The salt of 1.4. diaminobutane and adipic acid was obtained by adding a solution of the dicarboxylic acid in methanol to a solution of the diamine in methanol until the equivalence point was reached. The reaction mixture was cooled and the salt was recovered by filtration, subsequently washed with methanol and dried. To the dry salt 1.3 % by weight of the diamine, calculated in respect of the salt, was added.

The salt was put in an autoclave. After flushing the autoclave was heated. In 220 minutes a temperature of 215 °C was reached, heating rate 0.8 °C/minute on average, during the experiment varying between 0.15 °C/minute and 2.3 °C/minute. In this process the pressure increased from 1 bar to 14.6 bar. This was followed by blowing off to a pressure of 1 bar, and the reaction mass was cooled. Thus a solid white prepolymer with an $M_n$ of 3 500 was obtained ($\eta_{rel}$ of 1,38).

## Example VI (Not according to the invention)

A procedure which is suitable for the production of nylon 6.6 was followed, starting with a mixture of 1 000 g of the diaminobutane-adipic acid salt (diamine excess 2,4 mole %) and 700 g of water. The mixture was heated to 215 °C in 60 minutes and then in 120 minutes from 215 °C to 275 °C, the pressure being kept at a maximum of 18 bar. Then the reaction mass was heated to 295 °C in 15 minutes with slow release of pressure. The white prepolymer had an $\eta_{rel}$ of 1,36 and [pyr] of 0,263 meq/g. Aftercondensation (4 hrs at 260 °C) yielded a polyamide of $\eta_{rel}$ 1,71. This procedure is clearly unsuitable for the production of nylon 4.6.

## Example VII (Not according to the invention)

The procedure of example VI was repeated with the difference that the temperature was increased from 215 °C to 275 °C in 30 minutes. The prepolymer now had a $\eta_{rel}$ of 1,50 and [pyr] of 0,143. By aftercondensation the $\eta_{rel}$ was increased to 1,88.

## Example VIII

A mixture of 100 parts by weight of the diaminobutane-adipic acid salt (diamine excess 2,0 mole %), 10 parts of caprolactam and 10 parts of water was heated to 180 °C in 60 minutes and kept at 180 °C for 180 minutes with the pressure being kept at a maximum of 8 bar. The prepolymer was then obtained as in example I.

It had an $\eta_{rel}$ of 1,18 and [pyr] of 0,046 meq/g. Aftercondensation (4 hrs at 260 °C) yielded a nylon-6.46 copolymer of $\eta_{rel}$ 3,25.

### Example IX

The procedure of example VIII was repeated but now using 10 parts by weight of 11-amino undecanoic acid. The prepolymer had an $\eta_{rel}$ of 1,20 and [pyr] of 0,030 meq/g. Aftercondensation (4 hrs at 260 °C) yielded a nylon 11,46 of $\eta_{rel}$ 2,51.

When the example was repeated using 20 parts by weight of 11-amino undecanoic acid, the resulting prepolymer had an $\eta_{rel}$ of 1,18 and [pyr] of 0,035, aftercondensation (6 hrs at 250 °C) yielding a copolyamide of $\eta_{rel}$ 2,42.

### Example X

A number of prepolymers were prepared, starting from a salt of 1.4. diaminobutane and adipic acid, containing 1,1 mole % excess diaminobutane, and varying amounts of water. The mixture in each case was heated in about two hours to a given temperature, kept at said temperature for 5 minutes, after which the reaction mass was discharged from the reactor and cooled with release of pressure. The relative viscosity and content of cyclical end-groups of each prepolymer were determined. The prepolymers were then subjected to aftercondensation for 4 hours at 260 °C as in example I.

In table 1 the water content of the starting mixture, the maximum temperature and maximum pressure and the physical data of the prepolymer and the final polyamide are given.

Table 1

| | prepolymerisation | | | | | aftercondensation |
|---|---|---|---|---|---|---|
| exp't | water wt% | temperature °C | $P_{H_2O}$ max bar | $\eta_{rel}$ | [pyr] meq/g | $\eta_{rel}$ |
| a | 33 | 180 | 5* | 1,25 | 0,024 | 3,45 |
| b | 33 | 210 | 15 | 1,09 | 0,113 | 2,20 |
| c | 33 | 210 | 5* | 1,92 | 0,021 | 5,71 |
| d | 13,5 | 202 | 7,7 | 1,08 | 0,024 | 3,75 |
| e | 8,8 | 210 | 14,4 | 1,22 | 0,051 | 3,14 |

* pressure kept to the given value by letting of water vapour.

Determination of the pyrrolidine endgroups in nylon 4.6.

A glass tube containing 0,25 g of dry polyamide and 0,5 ml of 6N hydrochloric acid is flushed with nitrogen, sealed and heated to 130 °C in an oil-bath. This temperature is maintained until the polyamide dissolves and for four hours afterwards. The tube is then cooled, with attendant formation of crystals of adipic acid, and opened.

A sample for gas-chromatographic analysis is obtained by diluting 0,20 ml of the supernatant liquid with 0,70 ml of 2N alcoholic sodium hydroxide. Analysis is carried out by bringing 1 µl of the sample on a preconditioned chromosorb (chromosorb is a Registered Trade Mark) 130 column of 1,5 m $\times$ 1/4''' which is heated for one minute at 150 °C and then heated to 220 °C with a heating rate of 13 °C/minute.

Detection is carried out by catharometer method.

The pyrrolidine peak is detected after 4,5 minutes and the 1.4. diaminobutane peak after 8 minutes. The diaminobutane content of nylon 4.6 is 0,005 mole/g.

The pyrrolidine content is calculated on the base of the ratio between the area of the diamino-butane peak and the area of the pyrrolidine peak with the formula [pyr]=5 000/peak ratio, expressed in mmol pyrrolidine/g of polymer.

## Claims

1. Method for the preparation of a polyamide consisting of at least 80 % by weight of units of [NH—(CH$_2$)$_4$—NH—CO—(CH$_2$)$_4$—CO] by heating the salt of 1.4. diaminobutane and adipic acid and, if desired, other polyamide-forming compounds, with formation of a prepolymer, followed by further condensation to a polyamide with a high molecular weight, characterized in that prepolymerization is effected by heating the salt with an excess of diamine of between 0,5 and 15 moles %, and if desired up to 20 % by weight of other polyamideforming compounds, to a temperature of between 175 °C and 220 °C for a duration of no more than 6 hours, the water vapour partial pressure being maintained during the whole prepolymerization above the minimum partial pressure necessary to keep the reaction mass in the liquid state, and not above 30 bar, and said prepolymerisation being discontinued before the amount of cyclical end groups in the prepolymer reaches 0,20 mg equivalent per gram of prepolymer.

2. Method according to claim 1, characterized in that prepolymerization at a temperature between 175 °C and 220 °C takes place during a period of between 15 and 120 minutes.

3. Method according to any one of the claims 1-2, in which the content of cyclical endgroups in the prepolymer does not exceed 0,10 mg eq/g.

4. Method according to any one of the claims 1-3, characterized in that the water vapour partial pressure is not more than 5 bar higher than the minimum partial pressure necessary to keep the reaction mass in molten form at a given temperature and degree of polymerisation.

5. Method according to any one of the claims 1-4, characterized in that a mixture of the 1.4. diaminobutane-adipic acid salt with 50 % by weight of water at most, calculated in respect of the quantity of salt and water, is started from.

6. Method according to claim 1-5, characterized in that a prepolymer is prepared with a number-average molecular weight of between 1 000 and 15 000.

7. Method according to claim 1-6, characterized in that a prepolymer is prepared with a number-average molecular weight of between 2 000 and 10 000.

**Patentansprüche**

1. Verfahren zur Herstellung eines Polyamids, bestehend aus mindestens 80 Gew- % Einheiten von [NH—(CH$_2$)$_4$—NH—CO—(CH$_2$)$_4$—CO] durch Erhitzen des Salzes von 1.4. Diaminobutan und Adipinsäure und, falls erwünscht, anderen polyamidbildenden Verbindungen, mit Bildung eines Vorpolymers und anschliessender weiterer Kondensierung zu einem Polyamid mit hohem Molekulargewicht, dadurch gekennzeichnet, dass die Vorpolymerisation durch Erhitzen des Salzes mit einem Diaminüberschuss zwischen 0,5 und 15 Mol-% erfolgt und falls erwünscht bis zu 20 Gew.- % anderer polyamidbildender Verbindungen auf eine Temperatur zwischen 175 °C und 220 °C während einer Dauer von nicht mehr als 6 Stunden, wobei der Wasserdampf-Partialdruck während der gesamten Polymerisation über dem minimalen Partialdruck gehalten wird, der erforderlich ist, um die Reaktionsmasse in flüssigem Zustand zu halten, und zwar nicht über 30 bar und dass diese Polymerisation abgebrochen wird, bevor die Summe zyklischer End-gruppen im Vorpolymer 0,20 Milligramm Äquivalent pro Gramm Vorpolymer erreicht.

2. Verfahren nach Anspruch 1, dadurch gekennzeichnet, dass die Vorpolymerisation bei einer Temperatur zwischen 175 °C und 220 °C während eines Zeitraums von 15 bis 20 Minuten erfolgt.

3. Verfahren nach einem der Ansprüche 1-2, bei welcher der Gehalt an zyklischen End-gruppen im Vorpolymer 0,10 Milligramm Äquivalent nicht überschreitet.

4. Verfahren nach einem der Ansprüche 1-3, dadurch gekennzeichnet, dass der Wasserdampf-Partialdruck nicht mehr als 5 bar höher ist als der minimale Partialdruck, der erforderlich ist, um die Reaktionsmasse bei einer gegebenen Temperatur und einem gegebenen Polymerisationsgrad in geschmolzenem Zustand zu halten.

5. Verfahren nach einem der Ansprüche 1-4, dadurch gekennzeichnet, dass von einem Gemisch aus 1.4. Diaminobutan-Adipinsäuresalz mit höchstens 50 Gew.- % Wasser, berechnet in bezug auf die Salz- und Wassermenge, ausgegangen wird.

6. Verfahren nach den Ansprüchen 1-5, dadurch gekennzeichnet, dass ein Vorpolymer mit einem Zahlenmittel-Molekulargewicht zwischen 1 000 und 15 000 angefertigt wird.

7. Verfahren nach den Ansprüchen 1-6, dadurch gekennzeichnet, dass ein Polymer mit einem Zahlenmittel-Molekulargewicht zwischen 2 000 und 10 000 angefertigt wird.

**Revendications**

1. Procédé pour la préparation d'un polyamide constitué d'au moins 80 % en poids de mailles [NH—(CH$_2$)$_4$—NH—CO—(CH$_2$)$_4$—CO] en chauffant le sel de 1,4-diaminobutane et d'acide adipique et, si on le désire, d'autres composés générateurs de polyamide, avec formation d'un prépolymère, et ensuite condensation supplémentaire en un polyamide de poids moléculaire élevé, caractérisé en ce qu'on effectue la prépolymérisation en chauffant le sel avec un excès de diamine compris entre 0,5 et 15 moles %, et si on le désire jusqu'à 20 % en poids d'autres composés générateurs de polyamide, à une température comprise entre 175 °C et 220 °C pendant une durée de pas plus de 6 heures, la pression partielle de vapeur d'eau étant maintenue durant toute la prépolymérisation au-dessus de la pression partielle minimale nécessaire pour maintenir la masse réactionnelle à l'état liquide, et pas au-dessus de 30 bars, et al prépolymérisation étant arrêtée avant que la quantité de groupes terminaux cycliques dans le prépolymère atteigne 0,20 milliéquivalent-gramme par gramme de prépolymère.

2. Procédé selon la revendication 1, caractérisé en ce que la prépolymérisation à une température comprise entre 175 °C et 220 °C a lieu durant une période comprise entre 15 et 120 minutes.

3. Procédé selon l'une quelconque des revendications 1-2, dans lequel la teneur en groupes terminaux cycliques dans le prépolymère ne dépasse pas 0,10 milliéquivalent-gramme par gramme.

4. Procédé selon l'une quelconque des revendications 1-3, caractérisé en ce que la pression partielle de vapeur d'eau n'est pas supérieure de plus de 5 bars à la pression partielle minimale pour maintenir la masse réactionnelle à l'état fondu à une température et à un degré de polymérisation donnés.

5. Procédé selon l'une quelconque des revendications 1-4, caractérisé en ce qu'on part d'un mélange du sel 1,4-diaminobutane-acide adipique avec 50 % en poids d'eau au maximum, en calculant par rapport à la quantité de sel et d'eau.

6. Procédé selon les revendications 1-5, caractérisé en ce qu'on prépare un prépolymère d'un poids moléculaire moyen en nombre compris entre 1 000 et 15 000.

7. Procédé selon les revendications 1-6, caractérisé en ce qu'on prépare un prépolymère d'un poids moléculaire moyen en nombre compris entre 2 000 et 10 000.